(19) **Europäisches Patentamt / European Patent Office / Office européen des brevets**

(11) **EP 2 096 295 B1**

(12) **EUROPEAN PATENT SPECIFICATION**

(45) Date of publication and mention
of the grant of the patent:
**09.03.2011 Bulletin 2011/10**

(51) Int Cl.:
**F02M 25/07** (2006.01)   **F02D 21/08** (2006.01)

(21) Application number: **06841796.3**

(22) Date of filing: **11.12.2006**

(86) International application number:
**PCT/ES2006/070189**

(87) International publication number:
**WO 2008/071810 (19.06.2008 Gazette 2008/25)**

(54) **INTERNAL COMBUSTION ENGINE EGR APPARATUS**

AGR-VORRICHTUNG FÜR VERBRENNUNGSMOTOR

APPAREIL DE RECIRCULATION DE GAZ D'ÉCHAPPEMENT POUR MOTEUR À COMBUSTION INTERNE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.09.2009 Bulletin 2009/36**

(73) Proprietor: **BORGWARNER EMISSIONS SYSTEMS SPAIN, S.L.**
**36315 Vigo, Pontevedra (ES)**

(72) Inventor: **ROLANDO, Adriano**
**10087 Valperga Canavese (IT)**

(74) Representative: **Franzolin, Luigi et al**
**STUDIO TORTA**
**Via Viotti 9**
**10121 Torino (IT)**

(56) References cited:
**DE-A- 19 840 554**   **JP-A- 2002 332 919**
**JP-A- 2004 291 686**   **US-B1- 6 192 686**
**US-B1- 6 435 166**

## Description

The present invention relates to an exhaust gas recirculation (EGR) apparatus for an internal combustion (IC) engine, particularly a turbocharged automotive diesel engine.

It is well known that NOx emissions can be reduced by recirculating a portion of exhaust gases to engine intake. In present applications, EGR gas is routed through an EGR duct branching off the exhaust manifold upstream of the turbocharger turbine, and connected to the intake duct upstream of the turbocharger compressor. The EGR flow is ensured by the natural pressure difference between the exhaust manifold and the intake duct. The EGR flow rate and temperature are controlled via an EGR valve and an EGR cooler, respectively, located along the EGR duct.

This arrangement is suitable for present applications, i.e. applications that are designed to overcome the present emission standards (e.g. Euro 4 requirements in Europe set a standard of 0.25 g/km for NOx). However, future standards are expected to be considerably stricter: in particular, NOx standards for Euro 5 are 20% lower than present standards. This requires that the EGR mass flow rate be considerably increased, up to expected values of 65% of the total exhaust flow rate. In connection with the new requirements, the know arrangement would bring about an unacceptable increase in the dimensions and weight of the EGR cooler and valve. Furthermore, an increased mass of the mobile parts of the EGR valve would cause unacceptably increased response times.

Another problem connected with prior art systems of the aforesaid type, is that the EGR flow is still rich of precursors of particulate matter (PM) formation, such as oil droplets, hydrocarbons, chemically reactive PM. Therefore, this system is not suitable to comply with new PM requirements.

In order to solve these problems, new EGR schemes have been proposed, in which the EGR duct branches off the exhaust manifold downstream of the exhaust aftertreatment unit. These systems are generally designated "low-pressure EGR". The low-pressure circuit scheme has two fundamental advantages: the recirculated exhaust gas is colder (and therefore there is no need for substantially increasing the cooler dimensions) and free from PM precursors. More generally speaking, an added benefit is also the recirculation of a gas which has a low level of hydrocarbons, being them reduced by the catalyst.

However, the low-pressure systems suffer from a drawback consisting in an insufficient pressure differential between the ends of the EGR ducts. In facts, in certain operating conditions the pressure in the exhaust pipe downstream of the aftertreatment unit can be close to the pressure in the intake duct, and therefore natural flow of gas through the EGR duct may be impaired.

Different solutions to this problems have been proposed, including the use of throttle devices in the exhaust duct downstream of the EGR duct inlet and in the air intake duct upstream of the EGR duct outlet, and the use of a compressor in the EGR duct. JP 2002 332919 A discloses an EGR control apparatus having the features of the preamble of claim 1. However, none of the known solutions has proven to be fully satisfactory in terms of control of the EGR mass flow rate and dynamic response.

An object of the present invention is to devise an EGR control apparatus which is free from the drawbacks of the prior art.

This scope is attained by an engine EGR apparatus as claimed in claim 1.

A non-limiting embodiment of the present invention is described hereafter, with reference to the attached drawings in which:

Figure 1 is a scheme of an EGR apparatus according to the present invention;
Figure 2 is a diagram representing the speed of an EGR compressor of the apparatus of figure 1 as a function of the armature voltage of the drive motor;
Figure 3 is a diagram representing the mass flow rate of the EGR compressor as a function of the armature voltage of the motor;
Figure 4 is a scheme of the motor equivalent circuit;
Figure 5 is a diagram representing a first compressor working cycle;
Figure 6 is a diagram representing a second compressor working cycle;
Figure 7 is an exemplary diagram showing the motor armature voltage as a function of time;
Figure 8 is another exemplary diagram showing the motor armature voltage as a function of time;
Figure 9 is a schematic cross section of a preferred embodiment of the EGR compressor.

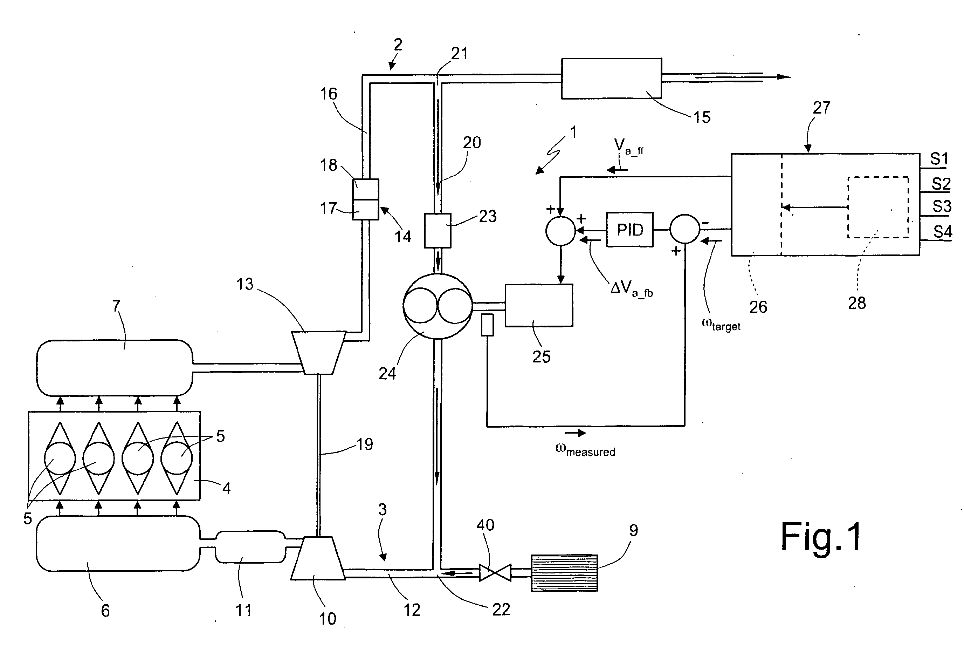

With reference to figure 1, numeral 1 designates an EGR apparatus providing recirculation of exhaust gases from an exhaust system 2 to an intake system 3 of an IC engine 4.

Engine 4 is a turbocharged diesel engine, and includes a plurality of cylinders 5, an intake manifold 6 and an exhaust manifold 7 selectively connected to the cylinders via a known valve system, not shown.

Air intake system 3 includes an air filter 9, a supercharging compressor 10 and an intercooler 11 cascading along an intake duct 12 connected to intake manifold 6.

Exhaust system 2 includes a turbine 13, an exhaust aftertreatment apparatus 14 and a muffler 15 cascading along a an exhaust duct 16. The aftertreatment apparatus includes a catalytic converter 17 and a particulate matter (PM) filter 18.

Compressor 10 and turbine 13 have respective rotors, not shown, that are rigidly connected to one another by a common shaft 19 in a conventional manner.

The EGR apparatus of the present invention includes an EGR duct 20 connecting the exhaust duct 16 to the intake duct 12. More particularly, EGR duct 20 extends from an inlet branch point 21 at exhaust duct 16 located downstream of the aftertreatment apparatus 14, namely between aftertreatment apparatus 14 and muffler 15, to an outlet branch point 22 at intake duct 12 located upstream of compressor 10, namely between air filter 9 and compressor 10. The apparatus is therefore a so-called "low-pressure" EGR system, since the exhaust gas are not recirculated from the exhaust manifold, where typical parameters would be about 450°C and 2-3· $10^5$ Pa, but rather from downstream of the aftertratment apparatus 14, where temperature can be around 250°C and pressure about 1.05 to 1.2·$10^5$ Pa.

The EGR apparatus 1 further includes an EGR cooler 23 and an EGR compressor 24 located along EGR duct 20 and aimed at controlling the recirculated exhaust gas temperature and mass flow rate, respectively.

EGR cooler 23 is a conventional gas/liquid heat exchanger using engine cooling water as a cooling fluid for the exhaust gas. EGR cooler 23 can be also integrated inside the compressor casing in order to reduce the dimensions of the overall system.

EGR compressor 24 is a rotary positive displacement compressor, e.g. a rotary vane compressor. EGR compressor 24 is driven by an electric motor 25 which is velocity-controlled by a control module 26 of the engine control unit (ECU) 27, so as to control the recirculated gas mass flow rate as described later on in grater detail. The use of a velocity-controlled positive displacement EGR compressor 24 allows the EGR mass flow rate to be determined and controlled as a function of the emission control needs which, in turn, can be determined for each engine working conditions; in particular, an optimum EGR per cent value can be determined by the ECU, in a manner per se known, on the basis of a lookup table 28 as a function of operating parameters such as accelerator pedal position and speed (position derivate), engine rpm, and ambient temperature; such parameters are represented by signals S1, S2, S3, S4 that are input to ECU 27. Therefore, the target velocity of the compressor can be determined as a function of the engine working conditions, but is not dependent on the engine speed per se.

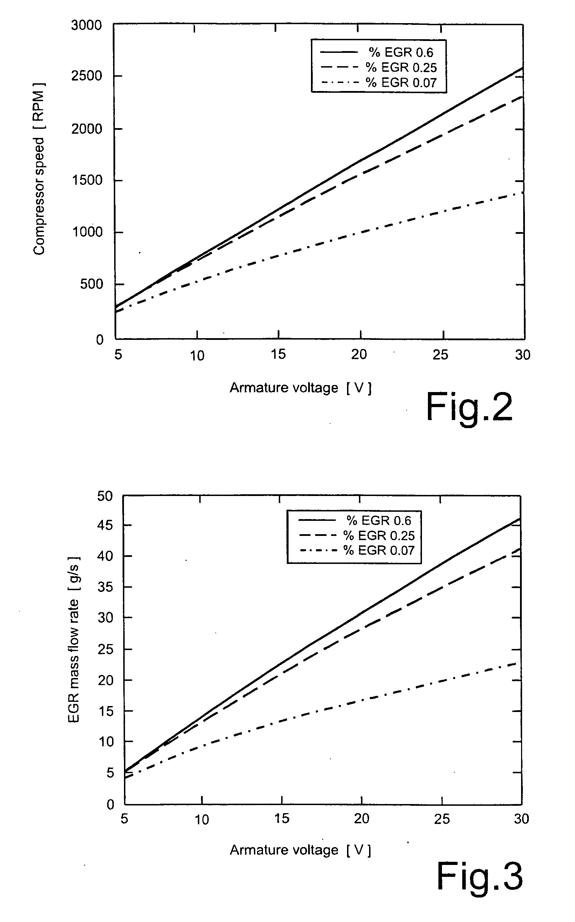

The speed of motor 25 is controlled by varying the armature voltage. In steady conditions, the speed/armature voltage characteristic curve of motor 25 (fig. 2) is quasi-linear. Since the EGR flow rate is proportional to the speed of compressor 24, a similar quasi-linear relationship exists - in steady conditions - between EGR mass flow rate request and the armature voltage of motor (fig. 3). It is thus possible to control EGR mass flow rate by controlling the armature voltage of motor 25.

Clearly, in dynamic conditions a variation in EGR flow rate requires the compressor speed to change, and therefore brings about a variation in the compressor resisting torque.

On the grounds of the above, and from a control standpoint, an EGR flow rate request from the ECU can be seen as a speed set point for motor 25, and the variation in the compressor resisting torque can be seen as a disturbance.

The resisting torque is subject to uncertainty, in particular because of friction, but can be estimated via a state observer that is based on a model of the electric motor/compressor unit, in order to provide a feedforward control for the electric motor that aims at a desired speed reference value.

A mathematical representation is given hereafter for the main elements (compressor, electric motor, control strategy) of the system. This could be done by following different approaches; the one presented here represents a suitable choice between model complexity and engineering purpose, being it clear that other models would be possible.

In the case of a DC electric motor, actuated varying the voltage armature, an elementary model is defined by the following equations:

$$[1] \qquad \frac{di_a}{dt} = \frac{1}{L_a}\left(-R_a i_a - K\Phi\omega + V_a(t)\right)$$

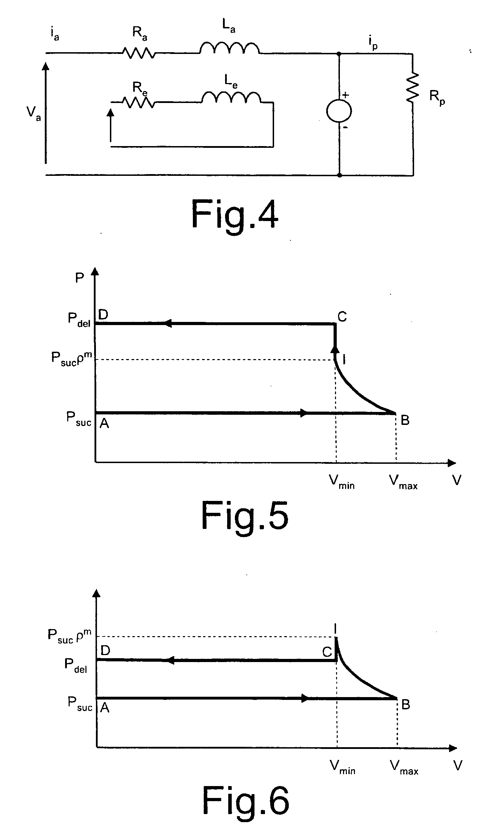

that represents the voltage balance across the armature circuit of the electric motor in accordance with the scheme of fig. 4, where

$i_a$ is the armature current,

$R_a$ is the armature equivalent resistance

$L_a$ is the armature equivalent inductance

$V_a$ is the armature voltage;

$K\Phi$ is the total magnetic flux, and

$\omega$ is the motor speed;

and:

$$[2] \quad \frac{d\omega}{dt} \approx \frac{1}{J}\left(K\Phi i_a - \beta_c\omega - C_r\right)$$

that represents the torque balance at the motor shaft, where the iron losses have been neglected and, in addition to already defined symbols,

$J$ is the moment of inertia of the rotating masses

$\beta_c\omega$ is the friction torque, and

$C_r$ is the resisting torque applied by compressor 24.

The compressor resisting torque $C_r$ depends on the polytropic work $L_c$ performed by compressor 24 on the fluid in each space between vanes. If there are $i$ vanes:

$$[3] \quad C_r = \frac{P_a}{\omega} = \frac{iL_c\dfrac{\omega}{2\pi}}{\eta_{mech}\cdot\eta_{compr.pol}\cdot\omega} = \frac{iL_c}{2\pi\cdot\eta_{mech}\cdot\eta_{compr.pol}}$$

where $P_a$ is the power adsorbed by compressor 24, $\eta_{mech}$ and $\eta_{compr,pol}$ are the mechanical and the polytropic compression efficiencies of the compressor.

With reference to the diagrams of figure 5 and 6, which represent the possible working cycles of compressor 24 depending on the delivery pressure level:

$$[4] \quad L_c = \int_B^I Vdp + V_{min}\left(P_{del} - P_{suc}\rho^m\right)$$

and therefore:

$$[5] \quad C_r \approx iL_c/(2\pi\cdot\eta_{mech}\cdot\eta_{compr.pol}) \approx \frac{iV_{max}}{2\pi\cdot\eta_{mech}\cdot\eta_{compr.pol}}\left[\frac{m}{m-1}P_{suc}(t)\left(\rho^m - 1\right) + \frac{1}{\rho}(P_{del}(t) - P_{suc}(t)\rho^m)\right]$$

where:

$V_{min}$, $V_{max}$ are the minimum and, respectively, maximum volume of the spaces between vanes;

$\eta_{compr,\,pol}$ and $\eta_{mech}$ are the compression polytropic efficiency and the mechanical efficiency;

$P_{suc}$ is the pressure at suction side of the compressor;

$P_{del}$ is the pressure at the delivery side of the compressor, i.e. at the branch point 22;

$\rho$ is the gas density; and

$m$ is the polytropic exponent.

For simplicity of representation, $\eta_{compr,\,pol}$ and $\eta_{mech}$ have been considered equal to one hereinafter. However, proper values can be inserted easily into the following equations for a more comprehensive representation.

Based on the above models, the equations of the state observer are the following:

$$[6] \quad \begin{bmatrix} \hat{\omega} \\ \Delta C_r \end{bmatrix}_{k+1} = \begin{bmatrix} 1 & -\Delta t/J \\ 0 & 1 \end{bmatrix}\begin{bmatrix} \hat{\omega} \\ \Delta\hat{C}_r \end{bmatrix}_k + \begin{bmatrix} \Delta t K\Phi/J & -\Delta t/J \\ 0 & 0 \end{bmatrix}\begin{bmatrix} i_{a\_meas} \\ C_{r\_nom} \end{bmatrix}_k + \begin{bmatrix} L_1 \\ L_2 \end{bmatrix}(\omega_{measured} - \hat{\omega}_k)$$

where

$i_{a\_meas}$ is the measured armature current

$C_{r\_nom}$ is known from equation [5], and

$L_1, L_2$ are feedback gains that determine the speed of the state observer

Being:

$$[7] \qquad A = \begin{bmatrix} 1 & -\Delta t / J \\ 0 & 1 \end{bmatrix},$$

$$[8] \qquad C = [1 \quad 0],$$

and

$$[9] \qquad L = \begin{bmatrix} L_1 \\ L_2 \end{bmatrix}$$

gains $L_1$ and $L_2$ can be estimated according to control theory. For instance, they can be determined by imposing the eigenvalues of the closed loop state matrix of the observer:

$$[10] \qquad A - LC = \begin{bmatrix} 1 - L_1 & -\Delta t / J \\ -L_2 & 1 \end{bmatrix}$$

On the grounds of the resisting torque value $C_r + \Delta C_r$ estimated according to the state observer described above and the motor target speed, a reference armature control voltage can be determined:

$$[11] \qquad V_{a\_ref} = \frac{\hat{C}_r + \Delta C_r}{K\Phi} R_a + K\Phi\omega_{target}$$

In order to optimize the dynamic response of motor 25, the calculated nominal control voltage can be filtered via a compensator having one zero and one pole. The compensator may be represented, in Laplace transform, by the following equation:

$$[12] \qquad V_{a\_ff} = \frac{1 + s/\tau_2}{1 + s/\tau_1} V_{a\_ref}$$

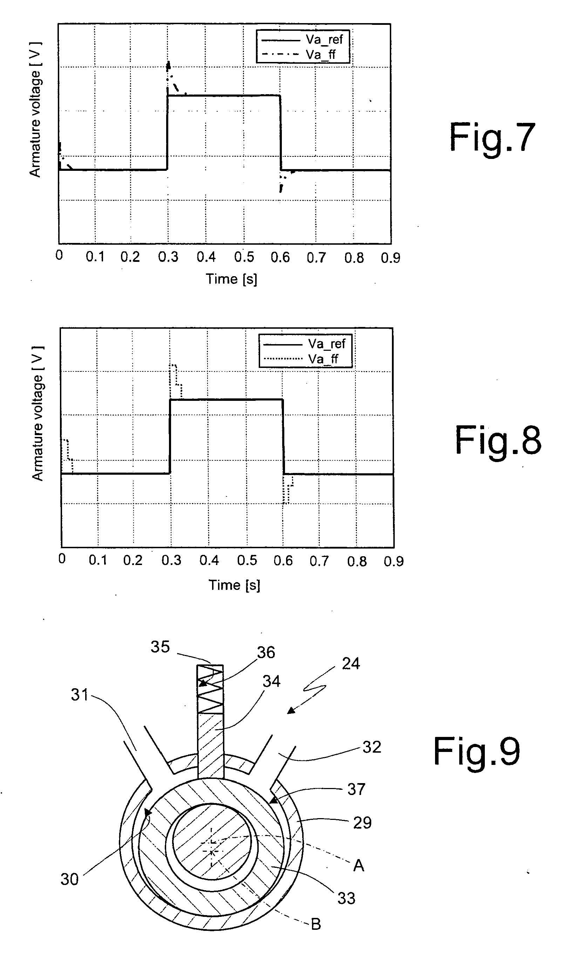

which, if the non-compensated armature reference voltage $V_{a\_ref}$ is a step function, can be represented in the time domain by the diagram of fig. 7, where the compensated value $V_{a\_ff}$ curve has spikes at each step front, each spike representing a rapidly decreasing, temporary voltage "overshooting" in the same direction as the desired voltage variation.

As an alternative, spikes can be substituted by short overshooting step or stepped pulses as represented in fig. 8, each pulse including one or more steps.

In addition to the above-described feedforward control, a feedback speed control can be provided in order to produce a control system which is precise in term of speed set point, or for which the error in the electric motor-compressor speed is less that a fixed acceptable value. For this purpose, a conventional PID controller can be used.

In this case, the armature voltage can be provided, as follows:

$$[13] \quad V_a = V_{a\_ff} + \Delta V_{a\_fb},$$

where:

$$[14] \quad \Delta V_{a\_fb} = K_p(\omega_{measured} - \omega_{t\arg et}) + K_i \int_0^t (\omega_{measured} - \omega_{t\arg et}) \cdot dt + K_d \frac{d(\omega_{measured} - \omega_{t\arg et})}{dt}$$

Gains $K_p$ and $K_i$ and $K_d$ can be adjusted to set the dynamic response of the assembly.

A scheme of this control is represented in figure 1.

In this manner, optimum dynamic response is ensured by the feedforward control, and optimum accuracy is ensured by the feedback control.

As an alternative, a further proportional feedback based on the difference between measured armature current $i_{a\_meas}$ and calculated nominal armature current $i_{a-nom}$ can be added:

$$[15] \quad \Delta V_{a\_fb} = K_p(\omega_{measured} - \omega_{t\arg et}) + K_i \int_0^t (\omega_{measured} - \omega_{t\arg et}) \cdot dt + K_d \frac{d(\omega_{measured} - \omega_{t\arg et})}{dt} +$$
$$+ K_c(i_{a\_meas}(t) - i_{a\_nom}(t))$$

According to an embodiment of the present invention, compressor 24 can be a single-vane, eccentric rotor compressor as shown schematically in fig 9.

Compressor 24 includes a casing 29 defining a cylindrical cavity 30 of axis A. Substantially radial suction port 31 and delivery port 32 communicate with cavity 30. Compressor 24 further includes an eccentric rotor 33 having an axis which is parallel but offset with respect to axis A. A single vane 34 is radially and slidingly housed in a seat 35 of casing 29 located between ports 31 and 32, and is biased by a spring 36 against rotor 33 so as to sealingly slide on the lateral surface 37 of rotor 33.

This kind of compressor has proven to be particularly effective due to low friction and good dynamic behaviour with respect to conventional rotary vane compressors.

A throttle valve 40 (fig. 1) can be optionally included on intake duct 12, between air filter 9 and EGR outlet branch point 22, in order to lower the pressure value at point 22 and thus aid EGR flow or reduce the compressor work.

The use of a positive displacement compressor in the frame of a low-pressure EGR apparatus wherein EGR gas is fed to the inlet duct upstream from the supercharging compressor 10 provides for independent control of EGR flow rate, which can be set at any desired level in each operating condition of the engine, independently of the engine speed per se and the total exhaust gas flow rate. Positive displacement compressor 24, as such, has primarily transfer and metering functions, rather than pressurizing functions; to this end, it is important that branch point 22 is upstream of the supercharging compressor 10, where the pressure value is low and substantially constant.

Positive displacement compressor 24 allows to dispense with the EGR valve.

The part of the electric motor control based on a mathematical model estimating the future torque absorbed by the motor provides for a high responsiveness, with no need for look-up tables that require a lengthy experimentation to be set and do not take into account parameter drift during ageing of the system.

Clearly, the described EGR apparatus can be modified without departing from the scope of the claims.

In particular, the electric motor can be of different type, and the actuating quantity can be other than the voltage armature, e.g., current, duty cycle, frequency, etc. and in general any quantity that is suitable for the type of motor used.

The feedback control can be of any known type, e.g. PI type.

The evaluation of the EGR rate inside the ECU (as a function of engine speed and load) can be done also in different ways (model-based estimation, mixed lookup table / model-based, etc...).

**Claims**

1. An EGR apparatus for an IC engine (4) including an exhaust duct (16) directing a flow of exhaust gas from the IC engine through a turbine (13) and an aftertreatment device (14), an intake duct (12) directing a flow of intake air to the IC engine through a supercharging compressor (10), an EGR duct (20) connecting said exhaust duct (16) at a point downstream of said aftertreatment device (14) to said intake duct (12) at a point upstream of said compressor (10), said EGR apparatus including an EGR cooler (23) and a positive displacement compressor (24) along said EGR duct (20), an electric motor (25) driving said positive displacement compressor (24), and a control means (26) controlling said motor (25) in response to an EGR flow rate request depending on operating parameters of said IC engine (4), **characterised in that** said control means includes a state observer which estimates the resisting torque of said positive displacement compressor (24).

2. An EGR apparatus as claimed in claim 1, **characterised in that** said electric motor (25) is a DC motor that is velocity-controlled by varying the armature voltage.

3. An EGR apparatus as claimed in claim 1, **characterised in that** said control means (26) is model-based.

4. An EGR apparatus as claimed in any of the preceding claims, **characterised in that** said control means include a control voltage compensator producing voltage overshooting at voltage transients in the same direction as voltage changes.

5. An EGR apparatus as claimed in claim 4, **characterised in that** said control voltage compensator has a zero and a pole.

6. An EGR apparatus as claimed in any of the preceding claims, **characterised in that** said control means include a model-based feedforward control means and a feedback control means.

7. An EGR as claimed in claim 6, **characterised in that** said feedback control means is of PI type.

8. An An EGR as claimed in claim 6, **characterised in that** said feedback control means is of PID type.

**Patentansprüche**

1. AGR-Vorrichtung für eine Verbrennungskraftmaschine (4) umfassend eine Auspuffleitung (16), die einen Auspuffgasfluss von der Verbrennungskraftmaschine durch eine Turbine (13) und ein Nachbehandlungsgerät (14) leitet, eine Ansaugleitung (12), die einen Ansaugluftfluss zu der Verbrennungskraftmaschine durch einen vorverdichtenden Kompressor (10) leitet, eine AGR-Leitung (20), die die Auspuffleitung (16) an einem dem Nachbehandlungsgerät (14) nachgelagerten Punkt mit der Ansaugleitung (12) an einem dem Kompressor (10) vorgelagerten Punkt verbindet, wobei die AGR-Vorrichtung einen AGR-Kühler (23) und einen Verdrängerkompressor (24) entlang der AGR-Leitung (20) umfasst, einen elektrischen Motor (25), der den Verdrängerkompressor (24) antreibt, und ein Stellmittel (26), das den Motor (25) in Reaktion auf eine AGR-Flussratenanfrage abhängig von Betriebsparametern der Verbrennungskraftmaschine (4) einstellt, **dadurch gekennzeichnet, dass** das Stellmittel einen Zustandsbeobachter umfasst, der das Widerstandsmoment des Verdrängerkompressors (24) schätzt.

2. AGR-Vorrichtung nach Anspruch 1, **dadurch gekennzeichnet, dass** der elektrische Motor (25) ein Gleichstrommotor ist, der geschwindigkeitsgesteuert ist, indem die Rotorspannung verändert wird.

3. AGR-Vorrichtung nach Anspruch 1, **dadurch gekennzeichnet, dass** das Stellmittel (26) modellbasiert ist.

4. AGR-Vorrichtung nach einem der vorstehenden Ansprüche, **dadurch gekennzeichnet, dass** das Stellmittel einen Stellspannungskompensator umfasst, der ein Spannungsüberschwingen bei Spannungsstößen in der gleichen Richtung erzeugt, wie sich die Spannung ändert.

5. AGR-Vorrichtung nach Anspruch 4, **dadurch gekennzeichnet, dass** der Stellspannungskompensator eine Nullstelle und einen Pol aufweist.

6. AGR-Vorrichtung nach einem der vorstehenden Ansprüche, **dadurch gekennzeichnet, dass** das Stellmittel ein modellbasiertes Vorwärtsstellmittel und ein rückgekoppeltes Stellmittel umfasst.

7. AGR-Vorrichtung nach Anspruch 6, **dadurch gekennzeichnet, dass** das rückgekoppelte Stellmittel vom PI-Typ ist.

**8.** AGR-Vorrichtung nach Anspruch 6, **dadurch gekennzeichnet, dass** das rückgekoppelte Stellmittel vom PID-Typ ist.

**Revendications**

**1.** Dispositif de recirculation EGR pour un moteur IC (4) comprenant une conduite d'échappement (16) dirigeant un flux de gaz d'échappement provenant du moteur IC à travers une turbine (13) et un dispositif de post-traitement (14), une conduite d'admission (12) dirigeant un flux d'air d'admission vers le moteur IC à travers un turbocompresseur (10), une conduite de recirculation EGR (20) reliant ladite conduite d'échappement (16) au niveau d'un point en aval dudit dispositif de post-traitement (14) à ladite conduite d'admission (12) au niveau d'un point en amont dudit compresseur (10), ledit dispositif de recirculation EGR comprenant un dispositif de refroidissement de recirculation EGR (23) et un compresseur volumétrique à déplacement positif (24) le long de ladite conduite de recirculation EGR (20), un moteur électrique (25) entraînant ledit compresseur volumétrique à déplacement positif (24), et un moyen de commande (26) commandant ledit moteur (25) en réponse à une demande de débit de recirculation EGR en fonction de paramètres de fonctionnement dudit moteur IC (4), **caractérisé en ce que** ledit moyen de commande comprend un observateur d'état qui estime le couple résistant dudit compresseur volumétrique à déplacement positif (24).

**2.** Dispositif de recirculation EGR selon la revendication 1, **caractérisé en ce que** ledit moteur électrique (25) est un moteur à courant continu qui est commandé par la vitesse en faisant varier la tension d'armature.

**3.** Dispositif de recirculation EGR selon la revendication 1, **caractérisé en ce que** ledit moyen de commande (26) est basé sur un modèle.

**4.** Dispositif de recirculation EGR selon l'une quelconque des revendications précédentes, **caractérisé en ce que** lesdits moyens de commande comprennent un compensateur de tension de commande produisant un dépassement de tension à des transitoires de tension dans le même sens que les variations de tension.

**5.** Dispositif de recirculation EGR selon la revendication 4, **caractérisé en ce que** ledit compensateur de tension de commande a un zéro et un pôle.

**6.** Dispositif de recirculation EGR selon l'une quelconque des revendications précédentes, **caractérisé en ce que** lesdits moyens de commande comprennent un moyen de commande à précompensation basé sur un modèle et un moyen de commande à rétroaction.

**7.** Dispositif de recirculation EGR selon la revendication 6, **caractérisé en ce que** ledit moyen de commande à rétroaction est du type PI.

**8.** Dispositif de recirculation EGR selon la revendication 6, **caractérisé en ce que** ledit moyen de commande à rétroaction est du type PID.

Fig.1

Fig.2

Fig.3

Fig.4

Fig.5

Fig.6

Fig.7

Fig.8

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002332919 A